# EUROPÄISCHE PATENTSCHRIFT

(11) **EP 2 711 248 B1**
(45) Veröffentlichungstag und Bekanntmachung des Hinweises auf die Patenterteilung: **05.11.2014**
(21) Anmeldenummer: 12185194.3
(22) Anmeldetag: 20.09.2012
(51) Int. Cl.: H02H 3/00, B60R 16/03

(54) **Zweispannungsbordnetz mit Überspannungsschutz**
Dual-voltage onboard power supply system with excess voltage protection
Réseau de bord bitension avec protection contre les surtensions

(43) Veröffentlichungstag der Anmeldung: 26.03.2014
(73) Patentinhaber: Eberspächer catem GmbH & Co. KG, 76863 Herxheim (DE)
(72) Erfinder: Reiss, Holger, 76764 Rheinzabern (DE); Bilhöfer, Andreas, 67105 Schifferstadt (DE)
(74) Vertreter: Grünecker, Kinkeldey, Stockmair & Schwanhäusser

(56) Entgegenhaltungen:
- DE-A1- 10 248 415
- JP-A- 58 206 444
- Anonymous: "Spannungsteiler", Wikipedia, 24. Juni 2012 (2012-06-24), XP055054328, Gefunden im Internet: URL:http://de.wikipedia.org/w/index.php?ti tle=Spezial:Buch&bookcmd=download&collecti on_id=1bbcac2c15684dfd&writer=rl&return_to =Spannungsteiler [gefunden am 2013-02-22]

## Beschreibung

Die vorliegende Erfindung betrifft ein elektrisches Kraftfahrzeug-Bordnetz. Insbesondere betrifft die Erfindung ein Kraftfahrzeug-Bordnetz, in dem nebeneinander zwei verschiedene Spannungsquellen (Batterien) unterschiedliche Gleichspannungen bereitstellen, mit denen jeweils eine Anzahl von Verbrauchern in einem entsprechenden Teilnetz des Kraftfahrzeug-Bordnetzes betrieben werden.

Generell dient ein Kraftfahrzeug-Bordnetz dazu, eine Vielzahl von Steuergeräten und Signalkomponenten in einem Kraftfahrzeug mit Strom zu versorgen. Der Strom wird entweder einer Batterie als Energiespeicher oder, beim Betrieb des Kraftfahrzeugmotors einem Generator (Lichtmaschine) entnommen. Über Relais oder einen elektrischen Stromverteiler mit Halbleiterschaltern kann eine Vielzahl einzelner Verbraucher (elektrischer Fahrzeugkomponenten) über individuelle Laststromkreise mit Strom aus dem Kraftfahrzeug-Bordnetz versorgt werden.

Herkömmliche Fahrzeugbordnetze basieren auf einer Batterienennspannung von 12 V.

Eine besondere Situation ergibt sich in Fahrzeugen mit Elektroantrieb (Elektro- und Hybridfahrzeuge) bei denen die Batterie (Akkumulator) nicht nur der Energieversorgung der herkömmlichen elektrischen Fahrzeugkomponenten dienen, sondern darüber hinaus auch Traktionsenergie bereitstellen müssen. Bei derartigen Fahrzeugen sind generell Bordnetzspannungen im automobiltechnischen Hochvoltbereich (oberhalb 60 V) üblich, insbesondere im Bereich von 200 bis 500 Volt (z. B. 300 Volt, 380 Volt oder 500 Volt).

Ein weiterer Vorteil höherer Spannung liegt darin, dass der bei hohen Leistungen benötigte Strom deutlich niedriger ist als in einem herkömmlichen 12 Volt-Bordnetz. Die dabei vorzusehenden Sicherheitsmaßnahmen sind jedoch sehr aufwendig.

Die Entwicklung der letzten Jahre ging deshalb dahin, auch in konventionellen Fahrzeugen die Bordnetzspannung zu erhöhen. Es standen zunächst Überlegungen im Vordergrund, die Bordnetzspannung generell zu erhöhen (z. B. von einem 14 V auf ein 42 V-System überzugehen). Eine solche Lösung hat jedoch den Nachteil, dass konventionelle, für eine Netzspannung von zum Beispiel 12 V oder 14 V ausgelegte Komponenten nicht mehr weiter verwendet werden können.

Deshalb gehen neuere Entwicklungen davon aus, künftig Kraftfahrzeug-Bordnetze mit zwei Teilnetzen mit unterschiedlichen Spannungen (z. B. 12 V und 48 V oder 14 V und 42 V) vorzusehen. Das Teilnetz mit der höheren Spannung (z. B. 48 V) ist dabei für die Verbraucher mit hoher Leistung vorgesehen ("Hochstromverbraucher", also zum Beispiel Motoren, Heizungen und Generatoren).

Bei der zusätzlichen Verwendung eines 48 Volt-Bordnetzes (neben dem bisherigen 12 Volt-Bordnetz) im Kraftfahrzeug werden gemäß z.B. der Norm LV148 "Elektrische und Elektronische Komponenten in Kraftfahrzeugen. 48V Bordnetz. Anforderungen und Prüfungen" (siehe z. B. BMW Group Standard GS 95026, Oktober 2011) hohe Anforderungen an die Sicherheit gestellt.

Dies ergibt sich insbesondere dadurch, dass zur Steuerung von Verbrauchern (insbesondere: Heizvorrichtungen) in dem Teilnetz mit der höheren Spannung (z. B. 48 V), Leistungshalbleiter verwendet werden, die aus dem Bordnetz mit der niedrigeren Spannung (z. B. 12 V) angesteuert werden. Diese Leistungshalbleiter (z. B. MOSFET - Metal Oxide Semiconductor Field Effect Transistor oder IGBT - Insulated Gate Bipolar Transistor) werden also aus dem 12 V-Bordnetz angesteuert, schalten jedoch Ströme des 48 V-Bordnetzes.

Es sei angemerkt, dass hier und im folgenden der Einfachheit halber von einem 12 V-Bordnetz und einem 48 V-Bordnetz gesprochen wird, wobei diese Zahlen jedoch nur beispielhaft und der Einfachheit halber zur Bezeichnung eines Teilnetzes mit einer niedrigeren Spannung und eines Teilnetzes mit einer höheren Spannung verwendet werden. Die Erfindung ist nicht auf die vorgenannten exemplarischen Werte beschränkt, sondern diese stehen nur beispielhaft für ein Teilnetz mit einer niedrigeren und ein Teilnetz mit einer höheren Spannung.

Die Berührungspunkte beider Bordnetze in Form der Leistungshalbleiter bergen folgendes Risiko in sich: Im Falle eines Fehlers ("Durchlegieren des Leistungshalbleiters"), verliert der Leistungshalbleiter seine Steuereigenschaften, wodurch die höhere Spannung (z. B. 48 Volt) am Steueranschluss des Leistungshalbleiters im 12 V-Bordnetz anliegt, und dadurch die Komponenten des 12 V-Teilnetzes (insbesondere Verbraucher und weitere Komponenten der Steuerelektronik) zerstört werden können.

Herkömmlich wird deshalb eine galvanische Entkopplung der beiden Teilnetze (12 V und 48 V) über Optokoppler eingesetzt. Optokoppler ermöglichen zwar eine galvanische Trennung, die im Fehlerfall sehr schnell reagieren kann, aber sie verursachen hohe Kosten und beanspruchen einen relativ großen Bauraum. Alternativ kann die galvanische Trennung auch mit Hilfe induktiver Koppler erfolgen. Diese haben jedoch den Nachteil, dass sie sehr viel langsamer reagieren.

Ein Kraftfahrzeug - Bordnetz gemäß dem Oberbegriff von Anspruch 1 ist aus der Schrift DE 102 48415 bekannt.

Es ist Aufgabe der vorliegenden Erfindung, ein verbessertes Zweispannungs-Kraftfahrzeugbordnetz bereitzustellen, bei dem auf einfache und kostengünstig zu realisierende Weise ein Übergreifen einer höheren Spannung eines Teilnetzes auf ein Teilnetz mit niedrigerer Spannung verhindert werden kann.

Diese Aufgabe wird mit den Merkmalen des Patentanspruchs 1 gelöst.

Gemäß einem Aspekt der vorliegenden Erfindung wird ein Kraftfahrzeugbordnetz bereitgestellt, welches ein erstes Teilnetz mit einer ersten Spannungsquelle und ersten Verbrauchern, sowie ein zweites Teilnetz mit einer zweiten Spannungsquelle und zweiten Verbrauchern umfasst. Hierbei stellt die zweite Spannungsquelle eine höhere Spannung als die erste Spannungsquelle bereit. Eine Verbindung des ersten und des zweiten Teilnetzes besteht über wenigstens ein Schaltelement mit einem Steueranschluss, das aus dem ersten Teilnetz angesteuert wird, um Ströme in dem zweiten Teilnetz zu schalten. Der Steueranschluss des wenigstens einen Schaltelements ist mit dem ersten Teilnetz über einen Spannungsteiler verbunden, der verhindert, dass im Störungsfall die höhere Spannung des zweiten Teilnetzes auf das erste Teilnetz durchgreift.

Es ist der besondere Ansatz der vorliegenden Erfindung, in einem Zweispannungsbordnetz eine Verbindung zwischen einem Steueranschluss eines Schaltelements im Teilnetz mit niedrigerer Spannung, welches Ströme in dem Teilnetz mit höherer Spannung schaltet, mittels eines Spannungsteilers zu realisieren. Dadurch wird sicher verhindert, dass im Falle einer Störung (z. B. Durchlegieren eines Leistungshalbleiters im Schaltelement) die höhere Spannung auf das Teilnetz mit der niedrigeren Spannung durchgreift, und die restlichen Komponenten in diesem zerstört, ohne dass eine aufwendige galvanische Trennung erforderlich ist. Die erfindungsgemäße Lösung ist kostengünstig und beansprucht wenig Bauraum.

Vorzugsweise umfasst das Schaltelement einen Leistungshalbleiter. Weiter vorzugsweise kann dies ein MOSFET sein. Alternativ kann als Leistungshalbleiter ein IGBT verwendet werden.

Gemäß einer bevorzugten Ausführungsform der vorliegenden Erfindung dient das Teilnetz mit der höheren Spannung der Versorgung einer Heizvorrichtung (z. B. eines Heiz-/Klimagerätes). Hierbei erfolgt mit Hilfe von Komponenten der Steuerelektronik, die in dem Teilnetz mit der niedrigeren Spannung vorgesehen sind, eine Ansteuerung der Schaltelemente (Leistungshalbleiter) um die Heizleistung zu schalten. Vorzugsweise wird hierbei der Strom durch ein entsprechendes Signal in Form einer an den Steueranschluss angelegten Spannung lediglich ein- oder ausgeschaltet. Alternativ ist es jedoch auch möglich, Teilströme zu schalten. Dies kann zum Beispiel über eine Ansteuerung mit einer Pulsbreitenmodulation (pulse width modulation -PWM) erfolgen. Hierdurch kann ein Heizstrom/eine Heizleistung anforderungsgemäß stufenweise oder quasikontinuierlich eingestellt (gesteuert) werden.

Es ist ein Vorteil eines erfindungsgemäßen Zweispannungsbordnetzes, dass herkömmliche Komponenten z. B. für die Steuerelektronik der Heizung aus einem 12 V-Bordnetz weiter verwendet werden können, und gleichzeitig die Vorteile der höheren Spannung für den Betrieb einer leistungsintensiven Heizvorrichtung ausgenutzt werden können.

Insbesondere kann die Verbindung der beiden Teilnetze über mehrere Schaltelemente erfolgen, die jeweils aus dem ersten Teilnetz angesteuert werden, um Ströme in dem zweiten Teilnetz zu schalten. Hierbei dient jeweils eines der Schaltelemente zum Schalten einer Heizstufe der Heizvorrichtung. Eine jeweilige Heizstufe kann aus einem oder einer Mehrzahl gemeinsam anzusteuernder PTC (positive temperature coefficient)- Elemente bestehen. In einem solchen Fall ist zur Sicherheit jeweils in der Verbindung zwischen einem Steueranschluss eines jeden Schaltelements und den restlichen Komponenten des Teilnetzes mit der niedrigeren Spannung ein erfindungsgemäßer Spannungsteiler vorgesehen. Wenn die einzelnen Heizstufen insbesondere unterschiedliche Heizleistungen erbringen, so kann durch wahlweises Zu- und Abschalten bestimmter Heizstufen eine anforderungsgemäße Leistung eingestellt werden. Weiterhin kann durch Ansteuerung zumindest eines Teils der Heizstufen über PWM eine feinstufigere Einstellung erreicht werden.

Vorzugsweise unterscheiden sich die Spannungen in dem ersten Teilnetz und in dem zweiten Teilnetz deutlich, um einen Faktor von mindestens 2, dass heißt also die Spannung in dem zweiten Teilnetz ist um ein mehrfaches größer als diejenige in dem ersten Teilnetz. Insbesondere ist gemäß einer bevorzugten Ausführungsform die von der zweiten Spannungsquelle bereitgestellte Spannung das Vierfache der von der ersten Spannungsquelle bereitgestellten Spannung. Wenn weiter vorzugsweise die erste Spannungsquelle eine Spannung von 12 Volt beträgt, so ist die entsprechende Spannung von der zweiten Spannungsquelle im zweiten Teilnetz 48 Volt. Eine derartige Ausgestaltung hat den Vorteil, dass für Komponenten mit niedrigerer Leistung, wie z.B. Steuerelektronik oder Einspritzpumpe herkömmliche Komponenten, die für ein 12 Volt-Bordnetz ausgelegt sind, unverändert weiter verwendet werden können.

Vorzugsweise umfasst der Spannungsteiler zwei Widerstandselemente. Ein erstes Widerstandselement ist direkt mit Erde verbunden, und ein zweites Widerstandselement ist direkt mit dem Schaltelement verbunden. Der Anschluss der restlichen Komponenten des Teilnetzes mit der niedrigeren Spannung erfolgt am Verbindungspunkt zwischen beiden Widerstandselementen. Hierbei wird das Verhältnis des Gesamtwiderstandes (der Summe der Widerstände der beiden Widerstandselemente) zu dem Widerstand des ersten Widerstandselementes so gewählt, dass es dem Verhältnis einer Spannung in dem zweiten Teilnetz zu einer Spannung in dem ersten Teilnetz entspricht. Hierdurch wird sichergestellt, dass auch bei einem Durchgreifen der Spannung aus dem zweiten Teilnetz durch ein gestörtes Schaltelement maximal die Spannung des niedrigeren Teilnetzes auf die übrigen Komponenten des Teilnetzes mit der niedrigeren Spannung durchgreift.

Vorzugsweise ist zusätzlich ein Trennkondensator parallel zum ersten Widerstandselement zwischen dem Verbindungspunkt der Widerstandselemente und Erde geschaltet. Dieser dient zur Stabilisierung der Steuerspannung des Schaltelements (MOSFET). Weiterhin kann er im Fehlerfall kurzzeitig höhere Spannungsspitzen unterdrücken.

Weitere vorteilhafte Ausgestaltungen sind Gegenstand der Unteransprüche.

Im Folgenden wird die vorliegende Erfindung anhand bevorzugter Ausführungsformen im Zusammenhang mit den beiliegenden Zeichnungen erläutert, in denen:
Fig. 1 ein allgemeines Schema eines herkömmlichen 12 V-Kraftfahrzeugbordnetzes darstellt;
Fig. 2 ein allgemeines Schema eines Zweispannungs-Kraftfahrzeugbordnetzes mit galvanischer Trennung der Teilnetze über einen Optokoppler darstellt;
Fig. 3 ein allgemeines Schema eines Zweispannungs-Kraftfahrzeugbordnetzes gemäß einer Ausführungsform der vorliegenden Erfindung darstellt; und
Fig. 4 eine schematische Darstellung eines erfindungsgemäßen Zweispannungs-Kraftfahrzeugbordnetzes gemäß einer weiteren Ausführungsform mit insgesamt drei Leistungshalbleitern und drei Spannungsteilern zur Absicherung im Störungsfall darstellt.

Die folgende detaillierte Beschreibung dient der Darstellung der Erfindung anhand ausgewählter Ausführungsformen und unter Bezug auf die Zeichnungen. Die vorliegende Erfindung, wie in den Patentansprüchen definiert, ist jedoch nicht auf die nachstehend beschriebenen Ausführungsformen und insbesondere die darin beispielhaft genannten Parameterwerte beschränkt.

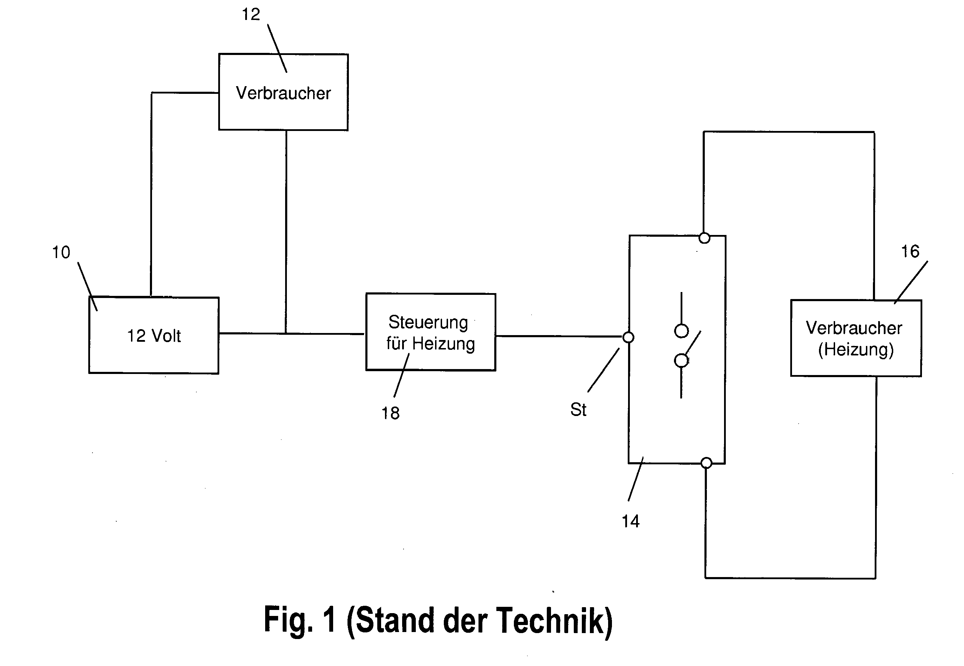

Fig. 1 stellt eine Prinzipskizze eines herkömmlichen Kraftfahrzeug-Bordnetzes mit einer Batteriespannung von 12 V (Volt) dar. Die Spannungsversorgung des Bordnetzes erfolgt durch eine Spannungsquelle 10, insbesondere eine Fahrzeugbatterie (Akkumulator). Im Regelfall umfasst das Bordnetz weiterhin einen Generator (im Bild nicht dargestellt), der während des Motorbetriebs sowohl zum Nachladen des Akkumulators als auch zur direkten Einspeisung elektrischer Energie in das Kraftfahrzeugbordnetz dient. Das Kraftfahrzeugbordnetz umfasst eine Reihe von Verbrauchern (elektrische Fahrzeugkomponenten wie Beleuchtung, Einspritzpumpe, Einrichtungen der Unterhaltungs- und Informationselektronik, Scheibenwischer, Fensterheber und andere). Dies wird in der Prinzipsskizze der Fig. 1 zusammenfassend in dem Block 12 dargestellt.

Insbesondere befindet sich unter den Verbrauchern eine Kraftfahrzeug-Heizvorrichtung bzw. Klimaanlage, im Bild separat im Block 16 dargestellt. Deren Ansteuerung erfolgt im Allgemeinen über ein Steuerelement 14, insbesondere einen Leistungshalbleiter. Hierbei wird ein von einer geeigneten Komponente der Steuerelektronik 18 (zum Beispiel einem Mikrocontroller µC) erzeugtes Steuersignal an einen Steueranschluss St des Schaltelements (Leistungshalbleiters) 14 angelegt. Damit kann die Leistung im Teilkreis mit der Heizvorrichtung gesteuert werden. Obwohl in Fig. 1 lediglich schematisch ein einziger, die Heizvorrichtung symbolisierender, Verbraucher 16, kombiniert mit einem einzigen Schaltelement 14 dargestellt ist, besteht die Heizvorrichtung im Regelfall aus einer Mehrzahl separat ansteuerbarer Komponenten (Heizstufen) die dann separat über eine Mehrzahl von Schaltelementen angesteuert werden können.

Mit zunehmendem Anstieg der erforderlichen elektrischen Leistung zum Betrieb einzelner Verbraucher im Kraftfahrzeug (wie z. B. Elektromotoren für verschiedenartige Hilfsbetriebe, Generatoren und Heizungen, sogenannte Hochstromverbraucher) geht man dazu über, Kraftfahrzeug-bordnetze so zu konzipieren, dass zwei Teilnetze mit verschiedenen Spannungen verwendet werden. Hiermit kann zum einen der Vorteil ausgenutzt werden, dass die Hochstromverbraucher mit deutlich niedrigeren Strömen betrieben werden können als in einem herkömmlichen 12 Volt-Bordnetz. Andererseits können für Verbraucher, die keine großen Leistungen benötigen, die herkömmlichen, für 12 Volt ausgelegten, Komponenten weiter betrieben werden.

Berührungspunkte beider Teilnetze ergeben sich daraus, dass sich die Steuerelektronik für die Hochstromverbraucher, insbesondere Heiz-/Klimageräte weiterhin im Bereich des Teilnetzes mit der niedrigeren Spannung befindet. Hierbei steuert die Steuerelektronik 18 aus dem Teilnetz mit niedrigerer Spannung heraus durch Anlegen entsprechender Spannungssignale an den Steueranschlüssen St der Leistungshalbleiter 14 so an, dass Ströme in dem Teilnetz mit höherer Spannung für die Hochstromverbraucher über die Leistungshalbleiter geschaltet werden.

Eine solche Lösung birgt jedoch das Risiko, dass im Fehlerfall (beim Durchlegieren des Leistungshalbleiters) die höhere Spannung in dem gesamten Teilnetz mit niedrigerer Spannung anliegt, und die dortigen elektronischen Komponenten, insbesondere auch die Steuerelektronik für Verbraucher im Teilnetz mit der niedrigeren Spannung wie Informationselektronik oder Einspritzpumpe sowie diese Verbraucher selbst zerstört.

Um dies zu verhindern, wird in herkömmlichen Zweispannungsbordnetzen eine galvanische Trennung der Teilnetze mit Hilfe von Optokopplern (die schnell reagieren) oder alternativ induktiven Kopplern (die sehr viel langsamer reagieren) eingesetzt.

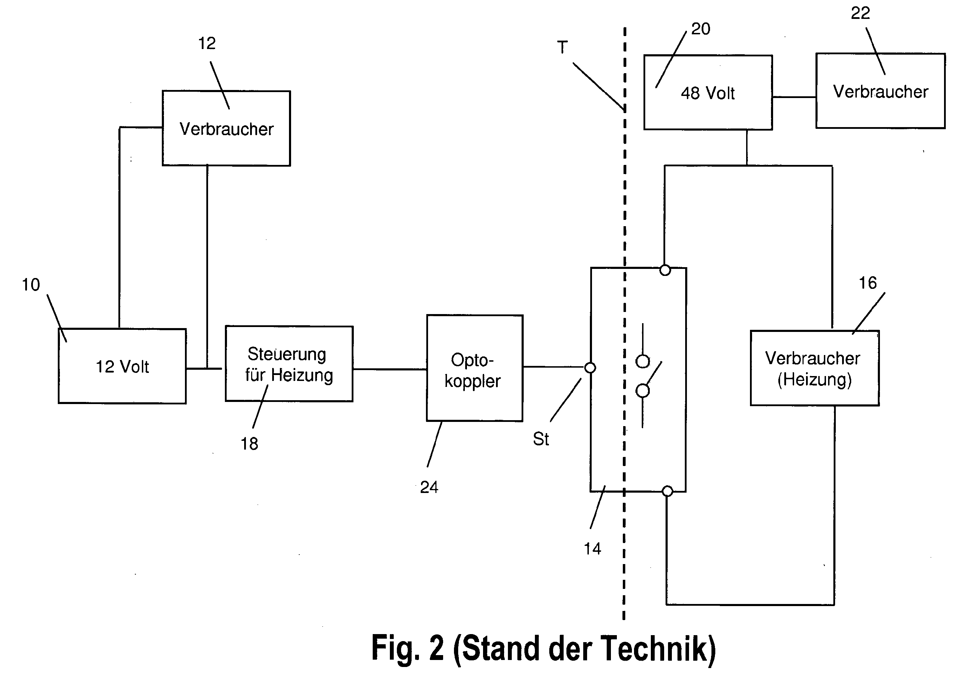

Fig. 2 ist eine Prinzipdarstellung eines herkömmlichen Zweispannungs-Kraftfahrzeugbordnetzes mit einem Optokoppler 24 zur galvanischen Trennung beider Teilnetze.

Auf der linken Seite der Zeichnung befindet sich eine schematische Darstellung des Teilnetzes mit der niedrigeren Spannung (beispielhaft wieder 12 Volt). In diesem Teil befindet sich neben der Spannungsquelle (Batterie) 10 insbesondere eine Reihe von Verbrauchern 12 niedriger Leistung sowie Komponenten der Steuerelektronik 18, die insbesondere auch Steuersignale für Verbraucher im Hochstrombereich/Hochleistungsbereich bereitstellen. Insbesondere umfasst die Steuerelektronik 18 vorzugsweise einen Mikrocontroller (µC). Auf der rechten Seite ist das Teilnetz mit höherer Batteriespannung (beispielhaft 48 Volt) dargestellt. In diesem befinden sich neben der Spannungsquelle 20 weitere Verbraucher (16 und 22). Diese Verbraucher schließen insbesondere eine Heizvorrichtung 16, im Bild separat dargestellt ein. Weitere Verbraucher sind in dem Block 22 zusammengefasst.

Die Ansteuerung der Verbraucher, insbesondere der Heizvorrichtung 16 erfolgt über ein Schaltelement 14, insbesondere einen Leistungshalbleiter (Steueranschluss St). Im Bild ist der Einfachheit halber nur ein Leistungshalbleiter 14 in Verbindung mit einem Verbraucher 16 gezeigt. Es können aber in analoger Weise eine Mehrzahl von Schaltelementen (Leistungshalbleitern) zum Schalten einer Mehrzahl von Verbrauchern, zum Beispiel mehrerer Heizstufen vorhanden sein.

Die Grenze zwischen den Bereichen mit höherer Spannung (rechts) und niedrigerer Spannung (links) im Normalbetrieb wird in Fig. 2 durch die Strichlinie T symbolisiert. Entsprechend der vorstehenden Beschreibung verläuft diese innerhalb des Leistungshalbleiters 14 zwischen den Anschlüssen der Hochstromverbraucher einerseits und dem Steueranschluss St andererseits. Im Fehlerfall kann der Leistungshalbleiter "durchlegieren". Er verliert dann seine Funktion als Schalter, und insbesondere ist die Potentialtrennung zwischen den Seite, die dem Schalten des Stroms dient (Elektroden Source und Drain) und dem Steueranschluss (Elektrode Gate) nicht mehr gegeben. Somit kann die höhere Spannung (im Beispiel 48 Volt) durch die Trennlinie T hindurch an dem Steueranschluss St anliegen.

Deshalb ist als Sicherheitselement zur galvanischen Trennung zwischen dem linken und dem rechten Teilnetz der Optokoppler 24 vorgesehen. Dieser verhindert ein Durchgreifen der Spannung von 48 V auf das 12 V-Teilnetz und somit eine Zerstörung von Komponenten dieses Teilnetzes.

Ein Nachteil des Einsatzes von Optokopplern zur galvanischen Trennung von 12 V- und 48 V-Teilnetzen besteht jedoch darin, dass Optokoppler teure Komponenten sind und darüber hinaus zu viel des in Kraftfahrzeugen knappen Bauraums beanspruchen.

Aus diesem Anlass heraus wurde die erfindungsgemäße Lösung entwickelt, bei der anstelle der galvanischen Trennung mit dem Optokoppler ein einfacher Spannungsteiler vorhanden ist.

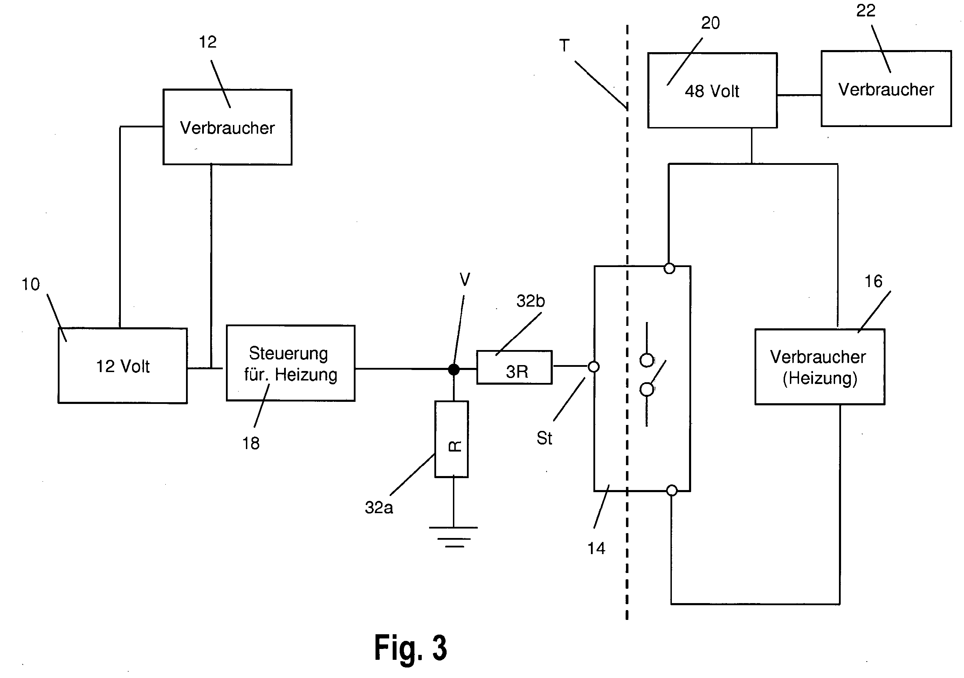

Eine entsprechende Ausführungsform der vorliegenden Erfindung ist schematisch in Fig. 3 dargestellt. Hierbei bedeuten gleiche Bezugszeichen entsprechende Elemente, so dass auf eine erneute detaillierte Beschreibung verzichtet wird.

Anstelle des Optokopplers 24 ist zwischen dem Steueranschluss St des Leistungshalbleiters 14 und dem 12 V-Teilnetz, insbesondere der Steuerelektronik 18, ein Spannungsteiler 32 geschaltet. Dieser umfasst ein Widerstandselement 32b, welches an einem Ende mit dem Steueranschluss St des Leistungshalbleiters 14 verbunden ist. Der andere Anschluss des Widerstandselements (Verbindungspunkt V) ist einerseits mit dem 12 V Teilnetz, und andererseits über ein weiteres Widerstandselement 32a mit Erde verbunden. Bei entsprechender Dimensionierung der Widerstandselemente 32a und 32b wird erreicht, dass die Zerstörungsgefahr nicht mehr besteht.

Im dargestellten Beispiel ist der Wert des Widerstands 32b dreimal so groß (3R) wie der Wert des Widerstands 32a (R). Dadurch fallen im Störungsfall, bei Durchlegieren des Leistungshalbleiters 14 die 48 V durch den Spannungsteiler auf 12 V, und somit auf das Spannungsniveau des 12 V-Bordnetzes ab. Allgemeiner, muss das Verhältnis des Gesamtwiderstandes (Summe der Widerstandswerte von 32a und 32b) zum Widerstandswert von 32a (mindestens) dem Verhältnis der Nennspannungen in den Teilnetzen mit der höheren und der niedrigeren Spannung entsprechen (im vorliegenden Fall 4:1). Auch ein noch größeres Verhältnis (also eine Verringerung des geerdeten Widerstands 32a relativ zu 32b) ermöglicht den gewünschten Schutz der Komponenten in dem Teilnetz mit der niedrigeren Betriebsspannung, da der an 32b abfallende Spannungsanteil dadurch noch größer wird und die an dem Teilnetz mit der niedrigeren Betriebsspannung im Fehlerfall anliegende Spannung somit kleiner ist als dessen Betriebsspannung. Es ist allerdings weiterhin zu beachten, dass der Widerstandswert R des Widerstandselements 32a nicht zu klein gewählt werden darf, damit im Regelbetrieb ein ausreichend starkes Steuersignal an dem Schaltelement 14 (MOSFET) anliegt.

Für die Dimensionierung der Widerstände ist im Allgemeinen der parallel zu dem Widerstand 32a geschaltete Innenwiderstand am Ausgang der Steuerung 18, insbesondere am Mikrocontrollerausgang, zu berücksichtigen. Dessen Wert ist jedoch nicht immer genau bestimmt und kann sich insbesondere im Fehlerfall auch ändern (wenn etwa ein Transistor am Steuerausgang durchlegiert). Auf Grund der Parallelschaltung des Widerstands des µC-Ausgangs und des Widerstands 32a führt die zusätzliche Berücksichtigung des ersteren jedoch effektiv immer zu einer Verringerung des mit Erde verbundenen Widerstands. Bei einem Verhältnis des Gesamtwiderstands aus 32a und 32b zu dem gegen Erde geschalteten Widerstand 32a entsprechend dem Verhältnis der Nennspannungen (im hier diskutierten Beispiel 1:4), ist man deshalb auf der sicheren Seite. Diese Auslegung bewirkt (im angegebenen Zahlenbeispiel), dass im Fehlerfall die ca. 48V auf nicht mehr als ca. 12V reduziert werden, und diese dann auf der 12V- Seite (Mikrocontrollerseite) anliegen. Es liegen dann eingangs- wie ausgangsseitig im Fehlerfall 12V am Mikrocontroller an. Selbst im Falle dessen, dass zusätzlich auch der Mikrocontroller zerstört wird (Durchlegieren), kann ein Durchgreifen höherer Spannungen aus dem Teilnetz mit der höheren Batteriespannung auf weitere, von den Hochstromverbrauchern (insbesondere der Heizung) unabhängige Komponenten des Teilnetzes mit der niedrigeren Batteriespannung verhindert werden.

Somit wird ein sicherer Schutz der Komponenten im 12 V-Bordnetz auch ohne eine galvanische Trennung auf einfache, kostengünstige und wenig Raum beanspruchende Weise erreicht.

Andererseits stören die Widerstände des Spannungsteilers das Steuerverhalten des Leistungshalbleiters 14 im Normalbetrieb nicht. Zum einem fließt über die Steuerelektrode St des Leistungshalbleiters 14 im Normalbetrieb kein oder nur ein sehr geringer Strom. Zum anderen kann durch eine entsprechende Dimensionierung des Widerstandes 32a des Spannungsteilers erreicht werden, dass auch der über diesen aus Richtung des 12 V- Teilnetzes im Normalbetrieb Richtung Erde abfließende "Leckstrom" so gering bleibt, dass er keine maßgebliche Beeinflussung des Steuer- bzw. Schaltverhaltens verursacht. Wie bereits ausgeführt, darf der Widerstand 32a (R) und damit indirekt auch der Widerstand 32b (mindestens 3R) nicht zu klein werden, um eine einwandfreie Funktion des Schaltelements 14 im Regelbetrieb zu gewährleisten.

Generell ist davon auszugehen, dass beim Durchlegieren eines Leistungshalbleiters die gesteuerte Komponente, insbesondere die Heizung, bereits ausgefallen bzw. zerstört ist. Die Erfindung ermöglicht es jedoch, eine Ausbreitung des Schadens auf andere Fahrzeugkomponenten im 12 V-Teilnetz zu verhindern. Wenn 48 V am 12 V-Bordnetz anliegen würden, so bestünde das Risiko, dass außer dem Heizer, der mit dem Durchlegieren schon ausgefallen ist, auch die am 12 V-Bordnetz anliegenden Komponenten wie Stellmotoren sowie Steuergerät der Heizung zerstört würden.

Um zu überprüfen, ob ein Fehlerfall (insbesondere Durchlegieren eines Leistungsschalters) vorliegt, werden Plausibilitätschecks durchgeführt: Es werden Steuerbefehle zum Aktivieren/Deaktivieren einer Heizstufe ausgegeben und der entsprechende Strom wird überprüft. Stimmt der Stromfluss nicht mit den Steuerbefehlen überein, liegt ein Fehlerfall vor und die Heizung schaltet sich selbsttätig ab.

Diese Plausibilitätschecks könnten aber nicht mehr durchgeführt werden und die Selbstabschaltung würde versagen, wenn durch ein Durchlegieren eines Leistungshalbleiters, der Ströme im 48 V-Bordnetz schaltet, die Steuereinheit der Heizung im 12 V- Bordnetz zerstört würde. Dadurch, dass die Erfindung ein Durchgreifen der 48 V auf das 12 V-Bordnetz verhindert, kann insbesondere auch die Funktionalität der Plausibilitätschecks erhalten bleiben.

Ein besonderer Vorteil der erfindungsgemäßen Lösung ist neben dem kleinen Bauraum und der kostengünstigen Realisierung die einfache und sichere Lösung, bei der eine Messung der anliegenden Spannung nicht erforderlich ist. Im Fehlerfall liegen die 48 V weiter am 12 V-Bordnetz (genauer: am 48 V-seitigen Eingang des Spannungsteilers) an, können aber keinen Schaden verursachen.

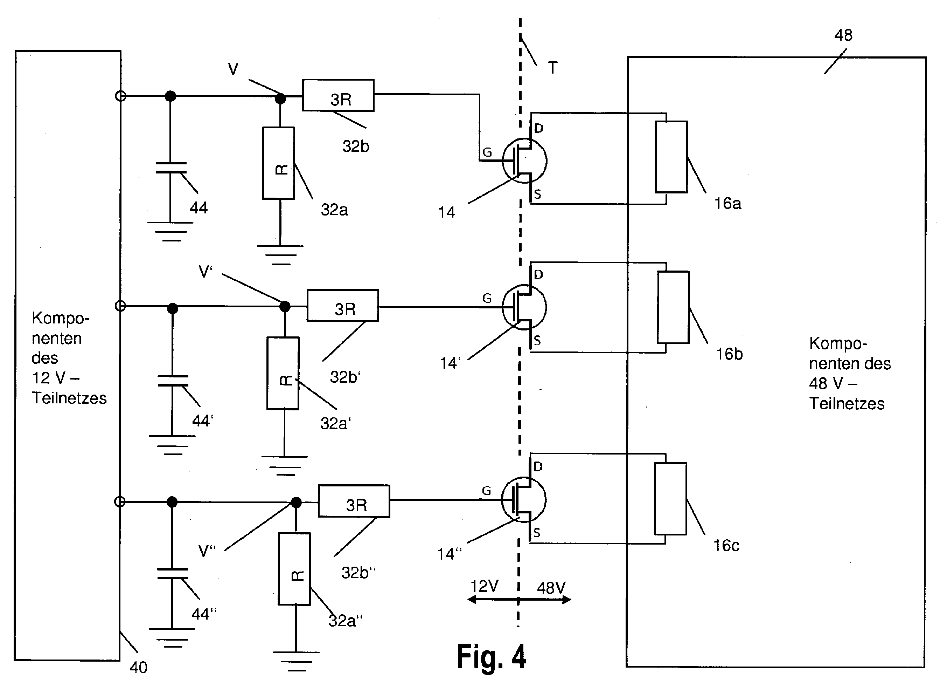

Eine weitere beispielhafte Darstellung des erfindungsgemäßen Zweispannungsbordnetzes ist in Fig. 4 gezeigt.

Hierbei sind beispielhaft drei verschiedene, aus dem 12 V-Teilnetz heraus gesteuerte, aber in dem 48 V-Teilnetz befindliche Verbraucher, z. B. drei verschiedene Heizstufen 16a, 16b und 16c dargestellt. Jede der Heizstufen ist ein eigener Leistungshalbleiter 14, 14', 14" zugeordnet, dessen Elektroden S (Source) und D (Drain) (Anschlüsse der Hochstromverbraucher) mit dem jeweiligen Verbraucher verbunden sind. Eine Steuerelektrode G (Gate; entspricht dem Steueranschluss in Fig. 3) ist über einen entsprechenden Spannungsteiler 32, 32', 32" mit dem 12 V-Teilnetz verbunden. Jeder der Spannungsteiler 32, 32', 32" besteht aus zwei Widerstandselementen, deren eines (32a, 32a', 32a") am Verbindungspunkt V (V', V") angeschlossen und mit Erde verbunden ist. Zusätzlich ist parallel zum Widerstandselement 32a (32a', 32a") ein Trennkondensator 44 (44', 44") zwischen dem Verbindungspunkt V (V', V") und Erde vorgesehen, der in erster Linie der Stabilisierung der Steuerspannung des MOSFET 14 (14', 14") angesichts eines Leckstroms über den Widerstand 32a (32a', 32a") dient sowie im Fehlerfall kurzzeitig höhere Spannungsspitzen unterdrücken soll.

Die restlichen Komponenten der 12 V- und 48 V-Teilnetze sind lediglich schematisch in den Blöcken 40 und 48 dargestellt. Die Grenze zwischen den Teilnetzbereichen mit 12 V und 48 V wird wieder durch die gestrichelte Trennlinie T symbolisiert.

Die erfindungsgemäße Schaltung ermöglicht es somit, dass im Störungsfalle, beim Durchlegieren auch nur eines der Leistungshalbleiter das 12 V-Teilnetz vor einem Durchgreifen der Spannung in Höhe von 48 V geschützt wird.

Zusammenfassend betrifft die vorliegende Erfindung ein Kraftfahrzeug-Bordnetz gemäß Anspruch 1 mit zwei verschiedenen Betriebsspannungen, bei der Leistungshalbleiter zum Schalten von Strömen in einem Teilnetz mit höherer Betriebsspannung aus einem Teilnetz mit niedrigerer Betriebsspannung heraus angesteuert werden. Die Erfindung ermöglicht einen sicheren Schutz von Komponenten in dem Teilnetz mit niedrigerer Betriebsspannung im Störungsfall, beim Durchlegieren eines Leistungshalbleiters, ohne dass eine aufwendige galvanische Trennung beider Teilnetze mittels teurer Komponenten erforderlich ist. Die erforderliche Absicherung gegen ein Durchgreifen der höheren Spannung auf die Komponenten mit niedriger Betriebsspannung wird durch den Einsatz eines entsprechend dimensionierten Spannungsteilers erreicht.

## Patentansprüche

1. Kraftfahrzeug-Bordnetz, umfassend ein erstes Teilnetz (40) mit einer ersten Spannungsquelle (10) und ersten Verbrauchern (12) sowie ein zweites Teilnetz (48) mit einer zweiten Spannungsquelle (20) und zweiten Verbrauchern (16, 22), wobei
die zweite Spannungsquelle (20) eine höhere Spannung als die erste Spannungsquelle (10) bereitstellt, und
eine Verbindung des ersten (40) und des zweiten Teilnetzes (48) über wenigstens ein Schaltelement (14, 14', 14") mit einem Steueranschluss (St, G) besteht, das aus dem ersten Teilnetz (40) angesteuert wird, um Ströme in dem zweiten Teilnetz (48) zu schalten,
**dadurch gekennzeichnet, dass**
der Steueranschluss (St, G) des wenigstens einen Schaltelements (14, 14', 14") mit dem ersten Teilnetz (40) über einen Spannungsteiler (32, 32', 32") verbunden ist, der verhindert, dass im Störungsfall die höhere Spannung des zweiten Teilnetzes (48) auf das erste Teilnetz (40) durchgreift.

2. Kraftfahrzeug-Bordnetz nach Anspruch 1, wobei das Schaltelement (14, 14', 14") einen Leistungshalbleiter umfasst.

3. Kraftfahrzeug-Bordnetz nach Anspruch 2, wobei der Leistungshalbleiter (14, 14', 14") ein MOSFET ist.

4. Kraftfahrzeug-Bordnetz nach einem der Ansprüche 1 bis 3, wobei die zweiten Verbraucher (16, 22) eine Heizvorrichtung (16) einschließen, und das Schaltelement (14, 14',14") zum Schalten eines Heizstroms der Heizvorrichtung (16) dient.

5. Kraftfahrzeug-Bordnetz nach einem der Ansprüche 1 bis 4, wobei die Verbindung des ersten (40) und des zweiten (48) Teilnetzes über mehrere Schaltelemente (14, 14', 14") besteht, die aus dem ersten Teilnetz (40) angesteuert werden, um Ströme in dem zweiten Teilnetz (48) zu schalten.

6. Kraftfahrzeug-Bordnetz nach Anspruch 5, wobei jeweils eines der Schaltelemente (14, 14', 14") zum Schalten einer Heizstufe einer Heizvorrichtung (16) dient.

7. Kraftfahrzeug-Bordnetz nach Anspruch 6, wobei jeweils eine Heizstufe (16a, 16b, 16c) eines oder eine Mehrzahl von PTC-Elementen umfasst.

8. Kraftfahrzeug-Bordnetz nach einem der Ansprüche 1 bis 7, wobei die von der zweiten Spannungsquelle (20) bereitgestellte Spannung die von der ersten Spannungsquelle (10) bereitgestellte Spannung um einen Faktor größer als zwei übertrifft.

9. Kraftfahrzeug-Bordnetz nach Anspruch 8, wobei die von der zweiten Spannungsquelle (20) bereitgestellte Spannung das Vierfache der von der ersten Spannungsquelle (10) bereitgestellten Spannung beträgt.

10. Kraftfahrzeug-Bordnetz nach einem der Ansprüche 1 bis 9, wobei die von der ersten Spannungsquelle (10) bereitgestellte Spannung 12 Volt beträgt.

11. Kraftfahrzeug-Bordnetz nach einem der Ansprüche 1 bis 10, wobei der Spannungsteiler (32, 32', 32") zwei Widerstandselemente (32a, 32b, 32a', 32b', 32a", 32b") umfasst,
wobei das Verhältnis des Gesamtwiderstandswertes aus der Summe der Widerstandswerte eines ersten, direkt mit Erde verbundenen Widerstandselementes (32a, 32a', 32a") und eines zweiten, direkt mit dem Schaltelement (14, 14', 14") verbundenen Widerstandselementes (32b, 32b', 32b") zu dem Widerstandswert des ersten Widerstandselements (32b, 32b', 32b") gleich dem Verhältnis einer Spannung in dem zweiten Teilnetz (48) zu einer Spannung in dem ersten Teilnetz (40) ist.

12. Kraftfahrzeug-Bordnetz nach Anspruch 11, wobei der Anschluss des ersten Teilnetzes (40) am Verbindungspunkt (V, V', V") beider Widerstandselemente des Spannungsteilers (32, 32', 32") erfolgt.

13. Kraftfahrzeug-Bordnetz nach Anspruch 12, wobei ein Trennkondensator (44, 44', 44") parallel zum ersten Widerstandselement (32b, 32b', 32b"), zwischen dem Verbindungspunkt (V, V', V') der Widerstandselemente und Erde geschaltet ist.

## Claims

1. Motor vehicle on-board power supply comprising a first sub-power supply (40) having a first voltage source (10) and first consumers (12), and a second sub-power supply (48) having a second voltage source (20) and second consumers (16, 22), the second voltage source (20) providing a higher voltage than the first voltage source (10), and the first (40) and the second sub-power supplies (48) being connected via at least one switch element (14, 14' 14") having a control terminal (St, G) which is actuated from the first sub-power supply (40) in order to switch currents in the second sub-power supply (48), **characterised in that** the control terminal (St, G) of the at least one switch element (14, 14' 14") is connected to the first sub-power supply (40) via a voltage divider (32, 32' 32") which prevents the higher voltage of the second sub-power supply (48) from penetrating the first sub-power supply (40) in the event of failure.

2. Motor vehicle on-board power supply according to claim 1, wherein the switch element (14, 14', 14") comprises a power semiconductor.

3. Motor vehicle on-board power supply according to claim 2, wherein the power semiconductor (14, 14', 14") is a MOSFET.

4. Motor vehicle on-board power supply according to any of claims 1 to 3, wherein the second consumers (16, 22) include a heating device (16), and the switch element (14, 14', 14") is used to switch a heating current of the heating device (16).

5. Motor vehicle on-board power supply according to any of claims 1 to 4, wherein the first (40) and the second (48) sub-power supplies are connected via a plurality of switch elements (14, 14', 14") which are actuated from the first sub-power supply (40) in order to switch currents in the second sub-power supply (48).

6. Motor vehicle on-board power supply according to claim 5, wherein each one of the switch elements (14, 14', 14") is used to switch a heating stage of a heating device (16).

7. Motor vehicle on-board power supply according to claim 6, wherein each heating stage (16a, 16b, 16c) comprises one or more PTC elements.

8. Motor vehicle on-board power supply according to any of claims 1 to 7, wherein the voltage provided by the second voltage source (20) is higher than the voltage provided by the first voltage source (10) by a factor of more than two.

9. Motor vehicle on-board power supply according to claim 8, wherein the voltage provided by the second voltage source (20) is four times the voltage provided by the first voltage source (10).

10. Motor vehicle on-board power supply according to any of claims 1 to 9, wherein the voltage provided by the first voltage source (10) is 12 volts.

11. Motor vehicle on-board power supply according to any of claims 1 to 10, wherein the voltage divider (32, 32', 32") comprises two resistor elements (32a, 32b, 32a', 32b', 32a", 32b"), wherein the ratio of the total resistance value, which consists of the sum of the resistance value of a first resistor element (32a, 32a', 32a"), which is directly connected to earth, and of a second resistor element (32b, 32b', 32b"), which is directly connected to the switch element (14, 14', 14"), to the resistance value of the first resistor element (32b, 32b', 32b") is the same as the ratio of a voltage in the second sub-power supply (48) to a voltage in the first sub-power supply (40).

12. Motor vehicle on-board power supply according to claim 11, wherein the first sub-power supply (40) is connected at the connection point (V, V', V") of the two resistor elements of the voltage divider (32, 32', 32").

13. Motor vehicle on-board power supply according to claim 12, wherein a blocking capacitor (44, 44', 44") is wired between the connection point (V, V', V") of the resistor elements and earth, in parallel with the first resistor element (32b, 32b', 32b").

## Revendications

1. Réseau de bord de véhicule automobile, comprenant un premier réseau partiel (40) avec une première source de tension (10) et des premiers récepteurs-consommateurs (12), ainsi qu'un deuxième réseau partiel (48) avec une deuxième source de tension (20) et des deuxièmes récepteurs-consommateurs (16, 22), réseau
dans lequel la deuxième source de tension (20) fournit une tension plus élevée que la première source de tension (10), et
dans lequel il existe une liaison entre le premier (40) et le deuxième réseau partiel (48) par l'intermédiaire d'au moins un élément de commutation (14, 14', 14''), qui comprend une borne de commande (St, G) et est commandé à partir du premier réseau partiel (40), en vue de commuter des courants dans le deuxième réseau partiel (48),
**caractérisé en ce que**
la borne de commande (St, G) dudit au moins un élément de commutation (14, 14', 14'') est reliée au premier réseau partiel (40) par l'intermédiaire d'un diviseur de tension (32, 32', 32''), qui, en cas de disfonctionnements, empêche que la tension plus élevée du deuxième réseau partiel (48) passe dans le premier réseau partiel (40).

2. Réseau de bord de véhicule automobile selon la revendication 1, dans lequel l'élément de commutation (14, 14', 14'') comprend un semi-conducteur de puissance.

3. Réseau de bord de véhicule automobile selon la revendication 2, dans lequel l'élément de commutation (14, 14', 14'') est un MOSFET (transistor à effet de champ).

4. Réseau de bord de véhicule automobile selon l'une des revendications 1 à 3, dans lequel les deuxièmes récepteurs-consommateurs (16, 22) englobent un dispositif de chauffage (16), et l'élément de commutation (14, 14', 14'') sert à la commutation du courant de chauffage du dispositif de chauffage (16).

5. Réseau de bord de véhicule automobile selon l'une des revendications 1 à 4, dans lequel la liaison entre le premier (40) et le deuxième réseau partiel (48) se fait par l'intermédiaire de plusieurs éléments de commutation (14, 14', 14''), qui sont commandés à partir du premier réseau partiel (40) en vue de commuter des courants dans le deuxième réseau partiel (48).

6. Réseau de bord de véhicule automobile selon la revendication 5, dans lequel respectivement un des éléments de commutation (14, 14', 14'') sert à commuter un étage de chauffe respectif d'un dispositif de chauffage (16).

7. Réseau de bord de véhicule automobile selon la revendication 6, dans lequel respectivement un étage de chauffe (16a, 16b, 16c) comprend un ou plusieurs éléments à coefficient de température positif dits éléments PTC.

8. Réseau de bord de véhicule automobile selon l'une des revendications 1 à 7, dans lequel la tension fournie par la deuxième source de tension (20) est plus grande que la tension fournie par la première source de tension (10), d'un facteur supérieur à deux.

9. Réseau de bord de véhicule automobile selon la revendication 8, dans lequel la tension fournie par la deuxième source de tension (20) est égale à quatre fois la tension fournie par la première source de tension (10).

10. Réseau de bord de véhicule automobile selon l'une des revendications 1 à 9, dans lequel la tension fournie par la première source de tension (10) vaut 12 Volt.

11. Réseau de bord de véhicule automobile selon l'une des revendications 1 à 10, dans lequel le diviseur de tension (32, 32', 32'') comprend deux éléments de résistance (32a, 32b, 32a', 32b', 32a'', 32b''),
et dans lequel le rapport de la valeur de la résistance totale, constituée de la somme des valeurs de résistance d'un premier élément de résistance (32a, 32a', 32a'') relié directement à la terre et d'un deuxième élément de résistance (32b, 32b', 32b'') relié directement à l'élément de commutation (14, 14', 14''), à la valeur de résistance du premier élément de résistance (32b, 32b', 32b''), est égal au rapport d'une tension dans le deuxième réseau partiel (48) à une tension dans le premier réseau partiel (40).

12. Réseau de bord de véhicule automobile selon la revendication 11, dans lequel la connexion de branchement du premier réseau partiel (40) est effectuée au point de jonction (V, V, V'') des deux éléments de résistance du diviseur de tension (32, 32', 32'').

13. Réseau de bord de véhicule automobile selon la revendication 12, dans lequel un condensateur d'isolement (44, 44', 44'') est monté en parallèle au premier élément de résistance (32b, 32b', 32b''), entre le point de jonction (V, V', V'') des éléments de résistance et la terre.
